# EUROPÄISCHE PATENTSCHRIFT

(11) **EP 0 718 781 B1**
(45) Veröffentlichungstag und Bekanntmachung des Hinweises auf die Patenterteilung: **02.08.2000**
(21) Anmeldenummer: 95119648.4
(22) Anmeldetag: 13.12.1995
(51) Int. Cl.: G06F 15/17

(54) **Vorrichtung zur Verbindung zweier unterschiedlicher Rechnersysteme**
Device for connecting two different computersystems
Dispositif pour connecter deux ordinateurs différents

(30) Priorität: 23.12.1994 DE 4446355
(43) Veröffentlichungstag der Anmeldung: 26.06.1996
(73) Patentinhaber: SIEMENS AKTIENGESELLSCHAFT, 80333 München (DE)
(72) Erfinder: Gerber, Heinz, Dipl.-Ing., D-91058 Erlangen (DE)

(56) Entgegenhaltungen:
- WO-A-90/05342
- IBM SYSTEMS JOURNAL, Bd. 31, Nr. 3, 1.Januar 1992, Seiten 535-549, XP000287575 BERGGREN C: "THE BIPROCESSOR: A MERGER OF TWO ARCHITECTURES"
- VMEBUS IN PHYSICS CONFERENCE, 7.Oktober 1985, CERN , GENEVA , SWITZERLAND, Seiten 291-296, XP002001761 ALEXANDER: "A VME interface to an IBM mainframe computer"
- IBM TECHNICAL DISCLOSURE BULLETIN, Bd. 28, Nr. 9, Februar 1986, NEW YORK, US, Seiten 3794-3796, XP002001762 ANONYMOUS: "Channel Interface - IBM Series/1 to IBM Personal Computer"
- IBM TECHNICAL DISCLOSURE BULLETIN, Bd. 25, Nr. 10, März 1983, NEW YORK , USA, Seiten 5230-5235, XP002001763 FREEMAN: "Microprocessor-to-microprocessor communications via an 8-bit data bus"

## Beschreibung

Die Erfindung bezieht sich auf eine Vorrichtung zur Anbindung eines Personalcomputers an einen Mehrarbeitsplatz-Rechner der mittleren Datentechnik über eine Schnittstelle mit differentiellen Eingabe- und Ausgabesignalen und erforderlicher Quittung auf eine zentrale Anforderung des Mehrarbeitsplatz-Rechners.

Vor allem ältere Mehrarbeitsplatz-Rechnersysteme der mittleren Datentechnik vorzugsweise aus den siebziger Jahren entsprechen zumeist nicht mehr den heute gültigen Standards und lassen sich aufgrund ihrer spezifischen Eigenschaften teilweise nur schwer oder auch gar nicht durch aktuellere Rechnersysteme ersetzen. Da häufig die Konfiguration der bestehenden Anlagen nicht mehr geändert werden kann, weil hierzu zumeist das Betriebssystem neu erzeugt werden müßte, anschließend alle Anwenderprogramme in der richtigen Art und Weise neu geladen werden müssen und eventuell Korrekturen eingebracht werden müssen, das dazu notwendige Wissen jedoch aufgrund von Mitarbeiterfluktuation im Laufe der Zeit nicht mehr vorhanden ist, besteht daher der Wunsch, die auf den alten Systemen erfaßten und gespeicherten Daten mit anderen Systemen auszutauschen. Darüber hinaus soll der vorhandene Datenbestand mit modernen Standardmitteln wie Tabellenkalkulation und graphischer Veranschaulichung von Daten unter den weitverbreiteten Betriebssystemen DOS und WINDOWS bearbeitet werden können. Außerdem soll der alte, unzuverlässige, wartungsintensive und von den Ausmaßen sehr große Massenplattenspeicher durch günstigen Massenplattenspeicher auf Personalcomputer Systemen ersetzt werden. Ein solches System stellt beispielsweise der SICOMP-R-Rechner dar, ein Rechnersystem der mittleren Datentechnik der Firma Siemens, welches weder in Software noch Hardware den gängigen Standards entspricht.

Es ist bekannt, daß zur Erfüllung einer solchen Anforderung bisher die Möglichkeit bestand, mit sogenannten Terminal-Emulationen auf Personalcomputer-Basis Datensichtgeräte von Mehrarbeitsplatz-Systemen zu ersetzen. Solche Terminal-Emulationen werden an seriellen Schnittstellen des mittleren Datensystemes angeschlossen. Da die Transferrate dieser seriellen Schnittstellen jedoch maximal 9600 Baud, somit ca. 1000 pro Sekunde, beträgt, ist ein Datenaustausch zwischen mittlerem Datensystem und Personalcomputersystem durch File-Transfer zwar möglich, jedoch sehr langsam. Aufgrund dieser geringen Datenübertragungsrate läßt sich eine intensive Nutzung des externen Personalcomputer-Massenplattenspeichers, welcher ein hohes Datenvolumen beinhaltet, mit einer Terminal-Emulation nicht realisieren. Darüber hinaus besteht die Anforderung, nicht lediglich von der Personalcomputerseite auf das Mehrarbeitsplatz-System zugreifen zu können, sondern auch umgekehrt. Dies ist jedoch mit einer einfachen Terminal-Emulation auf Personalcomputer-Basis nicht zu erreichen.

IBM Systems Journal, Bd. 31, Nr. 3, 1. Januar 1992, Seiten 535-549 beschreibt eine Kopplung zwischen einem Hauptrechner (System/370) und einem Personalcomputer, bei der eine Umsetzung zwischen dem internen Busprotokoll des Hauptrechners und dem Microchannel-Protokoll des PS/2-Personalcomputers mittels eines eigenen Mikroprozessors und seiner Programme durchgeführt wird, der Zugriff auf den gesamten Speicher des Hauptrechners hat. Ferner weist die Kopplungshardware einen vom Personalcomputer adressierbaren eigenen Speicher auf.

VMEBUS In Physics Conference, 7. Oktober 1985, CERN, Geneva, Schweiz, Seiten 291-296 beschreibt eine VME-Schnittstelle für einen Ein-/Ausgabekanal eines Hauptrechners. Die Ankopplung von Datenerfassungsrechnern erfolgt dort über eine weitere VME-Ethernet-Schnittstelle. Die beschriebene VME-Schnittstelle emuliert verschiedene IBM Ein-/Ausgabe-Steuereinheiten mittels eines eigenen Mikroprozessors und seines Programm- und Datenspeichers. Darüber hinaus gibt es einen schnellen Datenpfad, für den jedoch der Mikroprozessor den Datentransfer einleitet.

Der Erfindung liegt daher die Aufgabe zugrunde, ein Vorrichtung zur Anbindung eines Mehrarbeitsplatz-Rechners der mittleren Datentechnik an einen Personalcomputer so auszugestalten, daß eine Kommunikation mit ausreichend hoher Datenübertragungsrate zwischen den beiden Systemen ermöglicht wird. Auf diese Weise sollen gleichzeitig alte, unzuverlässige, wartungsintensive und großvolumige Plattenspeicher durch günstige Massenplattenspeicher des Personalcomputers ersetzt werden. Um möglichst wenig in vorhandene Mehrarbeitsplatz-Systeme eingreifen zu müssen, sollen auf Seite des mittleren Datensystems so wenige Änderungen an Software oder Hardware vorgenommen werden wie möglich.

Gemäß der Erfindung wird diese Aufgabe durch die Kombination folgender Merkmale gelöst:
- Die Vorrichtung ist in Form einer Personalcomputer-Steckkarte für den ISA-Bus, EISA-Bus, Vesa-Local-Bus, PCI-Bus oder einen anderen Standardbus aufgebaut,
- an die Zentraleinheit des Mehrarbeitsplatz-Rechners ist die Steckkarte über einen parallelen Anschluß anschließbar,
- der Befehlstransfer ist über eine Quittungslogik steuerbar, die hardwaremäßig Signale der Gegenseite bestätigt, bevor ein Software-Programm im Personalcomputer aktiviert wird,
- Eingabe- und Ausgabedaten werden in einem oder mehreren Datenregistern zwischengespeichert,
- übergebene Steuersignale werden in einem oder mehreren Statusregistern zwischengespeichert,
- eine Datenflußsteuerung liefert Signale zum Einschreiben von Ausgabedaten in ein Datenregister und decodiert Statusinformationen auf den Steuerleitungen,
- über einen Adressdecoder werden die Datenregister und/oder Statusregister vom Personalcomputer angesprochen.

Eine erste vorteilhafte Ausgestaltung der vorliegenden Erfindung beschränkt den Aufwand der Signalführung auf das für den Informationsgehalt notwendige Maß und ermöglicht dadurch eine besonders effektive und kostengünstige Realisierung. Dafür sind die Steuerleitungen in 5 Bit Datenbreite an die Vorrichtung geführt und über die Statusregister in 8 Bit Datenbreite an den Personalcomputer geführt.

Eine weitere vorteilhafte Ausgestaltung berücksichtigt besonders zeitkritische Anforderungen eines mittleren Datensystemes an die Quittierung von Steuersignalen, wie es beispielsweise beim Siemens SICOMP-R Mehrarbeitsplatz-Rechner der Fall ist. Zusätzlich erhöht sie die Flexibilität des Einsatzbereiches. Zu diesem Zweck sendet die Quittungslogik Quittungssignale innerhalb eines Zeitraumes von 50 Mikrosekunden, und wird die Quittungslogik bedarfsweise über einen Treiber auf Seiten des Personalcomputers abgeschaltet.

Eine andere vorteilhafte Ausgestaltung der Erfindung ist besonders gut auf die Möglichkeiten der Interrupt-Steuerung eines Personalcomputers zugeschnitten, wozu nach Quittierung Daten und Steuersignale in die Register eingespeichert und über eine Interrupt-Funktion des Personalcomputers aus den Registern in den Personalcomputer übertragen werden.

Eine andere vorteilhafte Ausgestaltung nimmt eine günstige Aufteilung des Adressraumes des Personalcomputers vor, welche den Aufwand der Anbindung verringert. Dazu verwendet der Adressdecoder die unteren 10 Bit des Adressbusses des Personalcomputers zur Ansteuerung von Registern und Generierung von Steuersignalen.

Im Rahmen der Erfindung können Pegelumsetzer vorhanden sein, die Differential-Signale der Daten- und Steuersignal-Leitungen auf der Seite des Mehrarbeitsplatz-Rechners in TTL-Signale auf der Seite des Personalcomputers und umgekehrt wandeln. Weiterhin kann die Steckkarte über den parallelen Anschluß an einen Standard-Platten oder Diskettenspeicher anschließbar sein.

Die mit der Erfindung erzielten Vorteile bestehen insbesondere darin, daß auf Seiten des mittleren Datensystems keine Änderungen an Software oder Hardware erforderlich werden, die mit Hilfe des Personalcomputers herbeigeführte Lösung steckerkompartibel zur vorhandenen Hardware des Mehrarbeitsplatz-Systems ist, zur Steuerung der Kommunikation lediglich zusätzliche Betriebskomponenten ergänzt werden müssen, der Datentransfer zwischen Mehrarbeitsplatz-Rechner und Personalcomputer über eine schnelle parallele Schnittstelle erfolgt, und daß das vorhandene mittlere Datensystem durch den Austausch der Daten nicht zusätzlich belastet wird, sondern der Personalcomputer diese Aufgaben selbst und um ein Vielfaches schneller löst. Darüber hinaus kann der unzuverlässige, wartungsintensive, großvolumige Standardplattenspeicher der Mehrarbeitsplatz-Rechnersysteme über eine Anbindung mit der erfindungsgemäßen Vorrichtung durch günstigen Massenplattenspeicher von Personalcomputern ersetzt werden.

Im Rahmen der Erfindung wird als parallele Schnittstelle ein bereits vorhandener Standarddatenanschluß auf Seiten des Mehrarbeitsplatz-Rechnersystemes verwendet. Damit lassen sich über diese Standardschnittstelle nicht lediglich Daten, sondern darüber hinaus auch Befehle übertragen. Dadurch lassen sich die durch einen Personalcomputer verwalteten Daten von Seiten des Mehrarbeitsplatz-Rechnersystemes so behandeln, als lägen sie auf herkömmlichen Massenspeichern des mittleren Datensystemes.

Ein Ausführungsbeispiel der Erfindung, bei dem ein SICOMP-R Mehrarbeitsplatz-Rechner (Firma Siemens) als mittleres Datensystem eingesetzt wird, ist in der Zeichnung dargestellt und wird im folgenden näher beschrieben. Dabei zeigt:

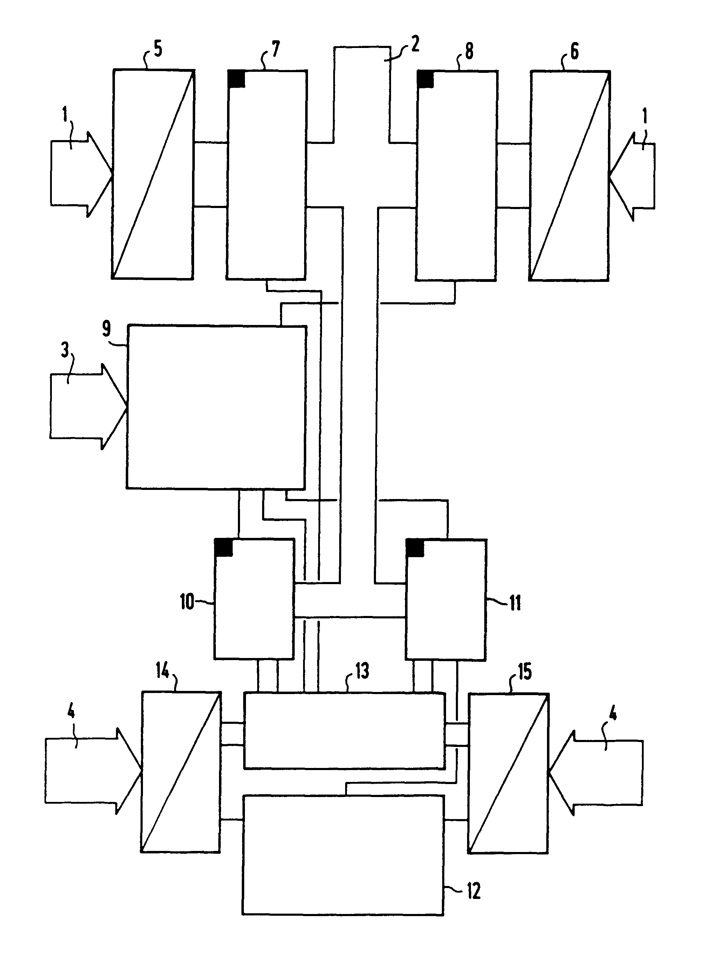

- FIG 1: ein Blockschaltbild der Vorrichtung zur Anschaltung eines Personalcomputers an einen Standardbus eines SICOMP-R Mehrarbeitsplatz-Rechners.

In der Darstellung in FIG 1 ist ein Blockschaltbild der Vorrichtung gezeigt, die exemplarisch eine Anschaltung eines Personalcomputers an einen Standardbus eines SICOMP-R-Mehrarbeitsplatzrechners ermöglicht. Die Vorrichtung ist in diesem Ausführungsbeispiel für den Anschluß an einen 16 Bit breiten Datenbus des Personalcomputers nach dem ISA-Bus-Standard 2 konzipiert. Auf Seiten des SICOMP-R-Mehrarbeitsplatzrechnersystemes wird ein ebenfalls 16 Bit breiter Standardbus 1 eines Platten- bzw. Diskettenspeichers eingesetzt.

Die Anschaltung an den SICOMP-R-Datenbus 1 erfolgt vorrichtungsseitig vorteilhafterweise durch zwei Pegelumsetzungseinheiten 5 und 6, welche von Seiten des SICOMP-R-Rechners ausgehende Differentialsignale in TTL-Signale und umgekehrt umsetzen. Pegelumsetzer 5 wandelt vom PC ausgehende Signale, Pegelumsetzer 6 die vom SICOMP-R-Rechner eingehenden Signale. Pegelumsetzer 5 ist über ein 16 Bit breites Datenregister zur Datenausgabe 7 an den 16 Bit breiten ISA-Bus 2 des Personalcomputers angeschlossen. Pegelumsetzer 6 für eingehende Signale wird ebenfalls über ein 16 Bit breites Datenregister zur Dateneingabe 8 an den 16 Bit breiten ISA-Bus 2 des Personalcomputers geführt.

Neben dem 16 Bit breiten Datenbus 1 des SICOMP-R-Rechners werden weitere Steuerleitungen 4 von 5 Bit Breite an die Vorrichtung geführt. Dafür existieren ebenfalls zwei Pegelumsetzer 14 und 15, die diese Signale von Differential nach TTL bzw. umgekehrt wandeln. Pegelumsetzer 14 dient zur Wandlung eingehender Signale, Pegelumsetzer 15 zur Wandlung vom Personalcomputer ausgehender Signale. Von beiden Pegelumsetzern 14 und 15 werden die gewandelten Daten über eine Datenflußsteuerung 13 entweder zu einem 8 Bit breiten Statusregister für eingehende Signale 10 oder zu einem 8 Bit breiten Statusregister für ausgehende Signale 11 geführt. Beide Statusregister 10 und 11 sind über einen 8 Bit breiten internen Bus an den 16 Bit breiten Personalcomputer-ISA-Datenbus angeschlossen. Der Adreßbus des Personalcomputers 3 gelangt vorrichtungsseitig an einen Adreßdecoder 9. Der Adreßdecoder 9 steuert das 16 Bit breite Dateneingangsregister 8, die beiden Statusregister 10 und 11 sowie die Datenflußsteuerung 13 an. Die Datenflußsteuerung 13 selbst steuert das Datenausgaberegister 7. Die beiden Pegelumsetzereinheiten 14 und 15 zur Umwandlung der Signale, welche über die 5 Bit breiten Steuerleitungen zur Vorrichtung gelangen, sind beide mit einer Quittungslogik 12 zur Vorabquittierung verbunden. Die Quittungslogik 12 selber steuert das Statusregister für ausgehende Steuersignale 11.

Bei der erfindungsgemäßen Verbindung zwischen den beiden Systemen im Personalcomputer und SICOMP-R-Rechner werden die Datenspeicher-Laufwerke an einer SICOMP-Geräteschnittstelle durch einen Personalcomputer umgesetzt. In den Personalcomputer wird zur Anschaltung an die SICOMP-Geräteschnittstelle eine Vorrichtung in Form einer Steckkarte für den ISA-Bus, EISA-Bus, VESA-LOCAL-Bus, den PCI-Bus oder einen anderen Standard-Bus für Personalcomputer eingebracht. Über diese Vorrichtung werden erfindungsgemäß die beiden Bussysteme von Personalcomputer und SICOMP-R-Rechner miteinander verbunden. In dem folgenden Ausführungsbeispiel wurde exemplarisch eine Vorrichtung zur Anschaltung an einen 16 Bit breiten Datenbus des Personalcomputers nach dem ISA-Bus-Standard gewählt.

Da das SICOMP-R-System zentraleinheitsseitig eine Busumsetzungsbaugruppe verwendet, welche Differentialsignale erzeugt, die über den 16 Bit breiten Datenbus 1 übertragen werden, erfolgt vorrichtungsseitig eine Pegelumsetzung durch einen Pegelumsetzer 6, in welchem die ankommenden Differential-signale in Signale mit TTL-Pegel umgewandelt werden. Die gewandelten Signale werden in ein 16 Bit breites Dateneingaberegister zwischengespeichert. Dieses Dateneingaberegister 8 selbst ist nun mit dem 16 Bit breiten ISA-Bus des Personalcomputers 2 verbunden.

Zur Datenausgabe vom Personalcomputer zum SICOMP-R-Mehrarbeitsplatzrechner werden die Daten ebenfalls in einem Datenausgaberegister 7 mit einer Datenbreite von 16 Bit zwischengespeichert. Die Werte werden in einer weiteren Pegelumsetzungseinheit 5 von TTL-Pegel in Differentialsignale umgesetzt, bevor sie an den 16 Bit breiten Datenbus 1 des SICOMP-R-Mehrarbeitsplatzsystemes gelangen.

Neben dem 16 Bit breiten Datenbus 1 wird die Übertragung durch Steuerleitungen 4 mit einer Breite von 5 Bit geregelt. Die Signale auf den Steuerleitungen sind ebenfalls Differentialsignale, die in Pegelumsetzungseinheiten 14 und 15 umgewandelt werden. Die Pegelumsetzungseinheit 14 wandelt eingehende Differentialsignale auf den Steuerleitungen in TTL-Signale um. Pegelumsetzungseinheit 15 hingegen wandelt ausgehende Signale vom TTL-Pegel in Differentialsignale um, ehe sie auf die 5 Bit breiten Steuerleitungen gelegt werden. Über die Steuerleitungen 4 werden Steuer und Quittungssignale von und nach dem SICOMP-R-Mehrarbeitsplatzrechner übertragen. Eingehende Steuersignale gelangen nach der Pegelumsetzung durch die Pegelumsetzungseinheit 14 als TTL-Signale zu einer Datenflußsteuerung 13, in der Statusinformationen aus Steuerleitungen 4 decodiert werden und schließlich in einem Statusregister 10 mit einer Datenbreite von 8 Bit zwischengespeichert werden. Vom Personalcomputer ausgehende Steuersignale werden in einem weiteren Statusregister 11 mit ebenfalls einer Datenbreite von 8 Bit zwischengespeichert, ehe sie durch die Datenflußsteuerung 13 aus dem Statusregister für ausgehende Signale 11 gelesen, codiert und schließlich der Pegelumsetzungseinheit für ausgehende Signale 15 zugeführt werden, wo eine Umsetzung des TTL-Pegels in Differential-signale erfolgt.

Die beiden Statusregister 10 und 11 für eingehende Steuersignale einerseits und für ausgehende Steuersignale andererseits ermöglichen ein Lesen bzw. Setzen der Steuersignale zum SICOMP-R-Mehrarbeitsplatzrechner und sind über einen internen Bus von 8 Bit Breite an den 16 Bit breiten Personalcomputer-Datenbus angeschlossen. Der Befehlstransfer vom SICOMP-Bus 1,4 wird über Quittungssignale gesteuert, die innerhalb von 50 msec von der Gegenseite quittiert sein müssen. Da im Personalcomputer unter dem Standardbetriebssystem MS-DOS die Bearbeitung von Interrupts unter Umständen länger dauern kann, ist es erforderlich, diese Signale hardwaremäßig vorab zu quittieren. Unter Interrupts versteht man besondere Steuersignale, die ein laufendes Programm unterbrechen und ein spezielles Unterprogramm ausführen, z.B. zum Auslesen eines Datenspeichers, um anschließend die Ausführung des zuvor unterbrochenen Programms fortzusetzen. Diese softwaremäßige Steuerung ist jedoch zu langsam, um einen geregelten Befehlstransfer auf dem SICOMP-R-Bus zu gewährleisten. Aus diesem Grunde wird erfindungsgemäß eine Quittungslogik 12 zur hardwaremäßigen Vorabquittierung eingesetzt.

Letztere Quittungslogik 12 ist sowohl mit der Pegelumsetzungseinheit 14 für einkommende Steuersignale sowie mit der Pegelumsetzungseinheit 15 für ausgehende Steuersignale verbunden. Erkennt die Quittungslogik 12, daß Signale an einer der beiden Pegelumsetzungseinheiten 14 und 15 anliegen, so werden diese hardwaremäßig quittiert und sie veranlaßt, daß die übergebenen Daten oder Steuersignale in den entsprechenden Registern zwischengespeichert werden. Für die übergebenen Daten sind dies für eingehende Daten das Dateneingangsregister 8 und für ausgehende Daten das Datenausgangsregister 7. Für Steuersignale sind es das Statusregister 10 für eingehende Signale und das Statusregister 11 für ausgehende Signale. Die in den entsprechenden Registern zwischengespeicherten eingehenden Signale werden nach der Bearbeitung des Interrupts von der Personalcomputer-Software gelesen.

Ein Adreßdecoder 9, welcher an den Personalcomputer-Adreßbus 3 angeschlossen ist, ermöglicht das gezielte Ansprechen der einzelnen Daten und Statusregister durch die Personalcomputer-Software. Der Adreßdecoder ist mit dem Dateneingangsregister 8, mit den beiden Statusregistern 10 und 11 sowie mit der Datenflußsteuerung 13 verbunden. Er decodiert aus den unteren 10 Bit des Personalcomputer-Adreßbusses 3 die Adressen für Dateneingabe- und Datenausgaberegister 7 und 8, Eingabestatusregister 10 und Ausgabestatusregister 11 und liefert Steuersignale für die Datenflußsteuerung in Richtung des SICOMP-R-Mehrarbeitsplatzrechners. Dateneingaberegister 8, Eingabestatusregister 10 sowie Ausgabestatusregister 11 werden direkt über den Adreßdecodierer 9 adressiert. Die entsprechenden Inhalte der Eingaberegister 8 und 10 werden daraufhin direkt auf den Personalcomputer-Datenbus gegeben bzw. der entsprechende Steuerwert vom Personalcomputer-Datenbus 2 in das Ausgabestatusregister 11 eingelesen.

Zur Ausgabe von Daten über das Datenausgaberegister 7 steuert der Adreßdecodierer erst die Datenflußsteuerung 13 an, welche zwischen Senden und Empfangen auf dem Datenbus 1 sowie den Steuerleitungen 4 regelt. Stellt die Datenflußsteuerung 13 fest, daß ein bereits vorhandener Wert aus dem Datenausgaberegister 7 erfolgreich gelesen wurde, so liefert sie das Signal zum Einschreiben einer neuen Ausgabeinformation in das Datenausgaberegister 7. Die Quittungslogik zur hardwaremäßigen Vorabquittierung 12 ist mit dem Ausgabestatusregister 11 verbunden. Gelangt ein neues Steuersignal in das Statusausgaberegister 11, so stößt dieses die Quittungslogik 12 an, ein entsprechendes Quittungssignal zu senden.

Für solche Fälle, in denen die Quittungslogik 12 selbst nicht benötigt wird, da die Zeitspanne zur Quittierung ausreichend groß bemessen ist, um diese softwaremäßig durch die Interruptsteuerung des Personalcomputers zu realisieren, kann die Quittungslogik 12 bedarfsweise über einen Software-Treiber auf Seiten des Personalcomputers deaktiviert werden.

## Patentansprüche

1. Vorrichtung zur Anbindung eines Personalcomputers an einen Mehrarbeitsplatz-Rechner der mittleren Datentechnik über eine Schnittstelle mit differentiellen Eingabe- und Ausgabesignalen und erforderlicher Quittung auf eine zentrale Anforderung des Mehrarbeitsplatz-Rechners mit folgenden Merkmalen:
- Die Vorrichtung ist in Form einer Personalcomputer-Steckkarte für den ISA-Bus (2), EISA-Bus, Vesa-Local-Bus, PCI-Bus oder einen anderen Standardbus aufgebaut,
- an die Zentraleinheit des Mehrarbeitsplatz-Rechners ist die Steckkarte über einen parallelen Anschluß anschließbar,
- der Befehlstransfer ist über eine Quittungslogik (12) steuerbar, die hardwaremäßig Signale der Gegenseite bestätigt, bevor ein Software-Programm im Personalcomputer aktiviert wird,
- Eingabe- und Ausgabedaten werden in einem oder mehreren Datenregistern (7,8) zwischengespeichert,
- übergebene Steuersignale (4) werden in einem oder mehreren Statusregistern (10,11) zwischengespeichert,
- eine Datenflußsteuerung (13) liefert Signale zum Einschreiben von Ausgabedaten in ein Datenregister (7) und decodiert Statusinformationen auf den Steuerleitungen (4),
- über einen Adressdecoder (9) werden die Datenregister und/oder Statusregister vom Personalcomputer angesprochen.

2. Vorrichtung nach Anspruch 1 mit folgendem weiteren Merkmal:
- Die Steuerleitungen (4) werden in 5 Bit Datenbreite an die Vorrichtung geführt und über die Statusregister in 8 Bit Datenbreite an den Personalcomputer geführt.

3. Vorrichtung nach Anspruch 1 oder 2 mit folgenden weiteren Merkmalen:
- Die Quittungslogik (12) sendet Quittungssignale innerhalb eines Zeitraumes von 50 Mikrosekunden,
- die Quittungslogik wird bedarfsweise über einen Treiber auf Seiten des Personalcomputers abgeschaltet.

4. Vorrichtung nach Anspruch 1, 2 oder 3 mit folgendem weiteren Merkmal:
- Nach Quittierung werden Daten und Steuersignale in die Register eingespeichert und über eine Interrupt-Funktion des Personalcomputers aus den Registern in den Personalcomputer übertragen.

5. Vorrichtung nach einem oder mehreren der vorstehenden Ansprüche mit folgendem weiteren Merkmal:
- Der Adressdecoder (9) verwendet die unteren 10 Bit des Adreßbusses (3) des Personalcomputers zur Ansteuerung von Registern und Generierung von Steuersignalen.

6. Vorrichtung nach Anspruch 1 mit Pegelumsetzern (5,6,14,15), die Differential-Signale der Daten- und Steuersignal-Leitungen auf der Seite des Mehrarbeitsplatz-Rechners in TTL-Signale auf der Seite des Personalcomputers und umgekehrt wandeln.

7. Vorrichtung nach Anspruch 1 wobei die Steckkarte an einen Standard-Platten- oder Diskettenspeicher-Anschluß des Mehrarbeitsplatz-Rechners angeschlossen ist.

## Claims

1. Device for connecting a personal computer to a multi-workstation computer of office-oriented data processing technology by way of an interface with differential input and output signals and necessary acknowledgement of a central demand of the multi-workstation computer, having the following features:
- the device is assembled in the form of a personal computer plug-in card for the ISA bus (2), EISA bus, Vesa-Local bus, PCI bus or another standard bus,
- the plug-in card is connectable to the central unit of the multi-workstation computer by way of a parallel terminal,
- the instruction transfer is controllable by way of an acknowledgement logic unit (12) which confirms signals of the opposite side in terms of hardware before a software program in the personal computer is activated,
- input and output data is intermediately stored in one or more data registers (7, 8),
- delivered control signals (4) are intermediately stored in one or more status registers (10, 11),
- a data flow control (13) supplies signals for writing output data into a data register (7) and decodes status information on the control lines (4),
- the data registers and/or status registers are addressed by the personal computer by way of an address decoder (9).

2. Device according to claim 1, having the following additional feature:
- the control lines (4) are guided with 5 bit data width to the device and are guided by way of the status registers with 8 bit data width to the personal computer.

3. Device according to claim 1 or 2, having the following additional features:
- the acknowledgement logic unit (12) transmits acknowledgement signals within a period of 50 microseconds,
- the acknowledgement logic unit is disconnected if necessary by way of a driver on the personal computer side.

4. Device according to claim 1, 2 or 3, having the following additional feature:
- after acknowledgement, data and control signals are stored in the registers and are transferred by way of an interrupt function of the personal computer from the registers into the personal computer.

5. Device according to one or more of the preceding claims, having the following additional feature:
- the address decoder (9) uses the lower 10 bits of the address bus (3) of the personal computer for the activation of registers and the generation of control signals.

6. Device according to claim 1, having level converters (5, 6, 14, 15) which convert differential signals of the data and control signal lines on the multi-workstation computer side into TTL signals on the personal computer side and vice versa.

7. Device according to claim 1, wherein the plug-in card is connected to a standard disk or diskette store terminal of the multi-workstation computer.

## Revendications

1. Dispositif pour rattacher un ordinateur personnel à un ordinateur à poste de travail multiple de la moyenne informatique par l'intermédiaire d'une interface par des signaux d'entrée et des signaux de sortie différentiels et avec un accusé de réception nécessaire sur une demande centrale de l'ordinateur à poste de travail multiple, comportant les caractéristiques suivantes :
- le dispositif est constitué en forme d'une carte de circuit imprimé enfichable d'ordinateur personnel pour le bus ISA (2), le bus EISA, le bus Vesa-Local, le bus PCI ou un autre bus normalisé,
- la carte de circuit imprimé enfichable peut être raccordée à l'unité centrale de l'ordinateur à poste de travail multiple par l'intermédiaire d'un raccordement parallèle,
- le transfert d'instructions peut être commandé par l'intermédiaire d'une unité (12) logique d'accusé de réception qui confirme du point de vue du matériel des signaux du côté opposé avant qu'un programme de logiciel ne soit activé dans l'ordinateur personnel,
- des données d'entrée et des données de sortie sont mises en mémoire intermédiaire dans un ou plusieurs registres (7, 8) de données,
- des signaux de commande transmis sont mis en mémoire intermédiaire dans un ou plusieurs registres (10, 11) d'état,
- une commande (13) de circulation de données fournit des signaux en vue de l'écriture de données de sortie dans un registre (7) de données et décode des informations d'état sur les lignes (4) de commande,
- les registres de données et/ou les registres d'état peuvent être sollicités par l'ordinateur personnel par l'intermédiaire d'un décodeur (9) d'adresse.

2. Dispositif suivant la revendication 1, comportant les caractéristiques supplémentaires :
- les lignes (4) de commande sont amenées en une longueur de données de 5 bits au dispositif et sont amenées par l'intermédiaire des registres d'état, en une longueur de données de 8 bits à l'ordinateur personnel.

3. Dispositif suivant la revendication 1 ou 2, comportant les caractéristiques supplémentaires suivantes :
- l'unité (12) logique d'accusé de réception émet des signaux d'accusé de réception en l'espace d'un laps de temps de 50 µm,
- l'unité logique d'accusé de réception est au besoin déconnectée par l'intermédiaire d'un circuit d'attaque du côté de l'ordinateur personnel.

4. Dispositif suivant la revendication 1, 2 ou 3, comportant la caractéristique supplémentaire :
- après accusé de réception, des données et des signaux de commande sont enregistrés dans les registres et sont transmis, par l'intermédiaire d'une fonction Interrupt de l'ordinateur personnel, des registres à l'ordinateur personnel.

5. Dispositif suivant l'une ou plusieurs des revendications précédentes, comportant la caractéristique supplémentaire suivante :
- le décodeur (9) d'adresse utilise les 10 bits inférieurs du bus (3) d'adresse de l'ordinateur personnel pour commander des registres et générer des signaux de commande.

6. Dispositif suivant la revendication 1, comportant des convertisseurs (5, 6, 14, 15) de niveau qui convertissent les signaux différentiels des lignes de données et des lignes de signaux de commande du côté de l'ordinateur à poste de travail multiple en signaux TTL du côté de l'ordinateur personnel et inversement.

7. Dispositif suivant la revendication 1, la carte de circuit imprimé enfichable étant raccordée à un raccordement d'une mémoire à disque normalisé ou d'une mémoire à disquette de l'ordinateur à poste de travail multiple.
